# EUROPEAN PATENT SPECIFICATION

(11) **EP 3 814 026 B1**
(45) Date of publication and mention of the grant of the patent: **07.06.2023**
(21) Application number: 18907670.6
(22) Date of filing: 28.02.2018
(51) Int. Cl.: B08B 3/02, B08B 3/14, B01D 29/52, B01D 29/56, B01D 35/26

(54) **CLEANING SYSTEM AND METHOD FOR GRAFFITI REMOVAL**
REINIGUNGSSYSTEM UND VERFAHREN ZUR GRAFFITIENTFERNUNG
SYSTÈME DE NETTOYAGE ET PROCÉDÉ D'ÉLIMINATION DE GRAFFITI

(43) Date of publication of application: 05.05.2021
(73) Proprietor: Ekowasher Sweden AB, 103 65 Stockholm (SE)
(72) Inventor: BJÖRKMAN, Bertil, 343 23 Älmhult (SE); MALMBERG, Kenth, 343 23 Älmhult (SE)
(74) Representative: Sahuquillo Huerta, Jesús
(86) International application number: PCT/SE2018/050194
(87) International publication number: WO 2019/168449

(56) References cited:
- EP-A1- 3 078 775
- EP-A1- 3 078 775
- DE-A1- 10 004 343
- GB-A- 2 362 314
- US-A- 5 704 989
- US-A- 5 704 989
- US-A- 5 826 298
- US-A1- 2010 186 773
- US-B1- 6 390 898

## Description

### Technical field

The present disclosure relates to a device and system for graffiti removal. More specifically, the device and system are based on the use of a high-pressure cleaner using pressurized liquid blasted onto a surface to be cleaned to force paint off the surface. Possibly, the graffiti is pre- treated using chemicals before high-pressure cleaning is started, for example by means of a liquid or gel-form graffiti removal compound. Preferably, the pressurized liquid is heated before being discharged onto the graffiti.

### Background

Graffiti is commonly applied to surfaces not intended for such a purpose, such as vehicles, houses, bridges, and other buildings. To remove graffiti a graffiti removal specialist is commonly hired. The graffiti removal specialist arrives by car and uses a high-pressure water cleaner to force graffiti off the underlying surface. Depending on the nature of the graffiti to be removed, the graffiti is pre-treated with an acid, base, or other compound suitable for helping the paint come off its underlying surface.

High-pressure graffiti removal is associated with several drawbacks.

Firstly, high-pressure cleaning requires a strong high-pressure cleaner capable of withstanding prolonged use, typically a device which is both expensive and cumbersome to transport to the site of use.

Secondly, supply of water must be ensured to the high-pressure cleaner, or the cleaner cannot be used. Usually, water is supplied from a tank provided on a car, trailer or other vehicle used by the graffiti removal specialist. A lot of time is spent traveling back and forth between a water reservoir and various places where graffiti is to be removed, greatly reducing the efficiency and thus capacity of the person and vehicle used for graffiti removal.

Thirdly, the use of a high-pressure cleaner tends to lead to chemicals and removed paint being washed off and into the surrounding air and soil, thereby contaminating nature and presenting a potential hazard to animals and humans.

Fourthly, using a standard high-pressure washer on e.g., electrical- and telecommunication cabinets may cause water to enter the cabinets through the frame and the hinges. Water inside such cabinets may damage the equipment inside. Further, wood surfaces are sensitive to high-pressure cleaning with water wince the water may blaster and destroy the surface as well a cause water intrusion. Also, a problem when high-pressure washing in public areas is that barriers have to be used to keep pedestrians and vehicles away from contamination by flowing liquid, liquid spray, and mist.

There are several documents disclosing cleaning systems not intended to graffiti removal. The document US5704989 relates generally to an environmentally sensitive cleaning system, and more specifically relates to a closed loop high pressure cleaning system for cleaning surfaces that minimizes water usage and contains contaminants before they enter the storm water drain system. The present invention is directed to a method and apparatus that satisfies this need. The apparatus comprises an established volume of fluid sufficient to circulate through the system, a pump to pressure the fluid to a cleaning head, a vacuum system to return the contaminated fluid to the system, and a filter means to remove the contaminants from the fluid so that clean fluid can be reintroduced to the cleaning head. The method comprises the steps of increasing the pressure of a fixed volume of fluid in a closed-loop system, jetting or blasting the surface with the pressurized fluid, vacuuming the blasted fluid into the system, and removing the contaminants from the fluid.

Furthermore, the document US5826298 relates to a power wash system which uses high pressure water for cleaning flat surfaces and recover a substantial portion of the dispersed water that contains mater recovered from the surface. The system includes a water storage means for holding water to be used for cleaning, a water pumping system for pumping and pressurizing the water and a cyclone sprayer for spraying the water onto the surface. An improvement in the system includes a power-driven retrieval rotor that picks up nearly all the liquid that has been sprayed by the system. The recovered liquid can then be filtered, processed, and placed in a storage means so that it can be further used for cleaning by the system. The system also preferably includes a water heater for heating the water.

Finally, the document US2010186773 relates to a cleaning device for cleaning surfaces. The invention further relates to the use of such a cleaning device for graffiti removal, and to a method for removing graffiti.

### Summary

These and other disadvantages of the prior art are mitigated by a cleaning system according to a first aspect of the invention and a method according to a second aspect of the invention. The cleaning system for graffiti removal from a surface to be cleaned comprises a container for liquid, a first pump for pumping liquid from said container to a discharge unit connectable to the first pump for discharging pumped liquid onto the surface to be cleaned. The discharge unit comprises a cover member defining an interior space and an opening through which liquid is dischargeable from said interior space onto the surface to be cleaned. One or more nozzles are provided within said interior space for discharging liquid pumped by said first pump. A circumferential portion of said cover member is provided with a resilient spray guard configured for sealing against the surface to be cleaned. Further, the system comprises a second pump connectable to an outlet port of the discharge unit for pumping air and liquid from said interior space and out through the outlet port. The first pump enables pumping of liquid from the container to the nozzles of the discharge unit such that liquid is charged onto graffiti paint to thereby force graffiti paint off the surface to be cleaned. The cover member contains the air/liquid mixture formed by the liquid when the liquid has hit the surface to be cleaned. The second pump enables the creation of an under pressure within the discharge unit and pumps the air and liquid away from the discharge unit such that loose paint, liquid, and air is transported out of the discharge unit in a controlled manner, substantially without contaminating the space around the surface to be cleaned. The spray guard prevents liquid leakage from the interior space thereby reducing contamination of surrounding spaces. The system thus enables efficient removal of graffiti with low environmental impact. Also, the design with one or more nozzles discharging liquid from inside the interior space ensures that the liquid is never discharged directly adjacent a sensitive surface as may be the case with standard high-pressure cleaners. Instead, liquid is always discharged at a controlled distance from the surface to be cleaned. Hence, the cleaning system reduces the risk of destroying sensitive surfaces while washing them.

The cleaning system comprises a filtering device configured to filter the liquid pumped from the discharge unit by the second pump and subsequently supply it to the first pump. The filtering device removes paint and other contaminants from the liquid pumped away from the discharge unit such that it can be used again by being supplied to the first pump again. Such a configuration of the system provides a closed-loop system where liquid is charged onto the surface to be cleaned, collected, filtered and subsequently supplied to the first pump again for continued use for graffiti removal. This greatly reduces the need of refilling the container with new liquid and thereby saves the operator of the system a lot of time since they do not have to travel back and forth between the surface to be cleaned and the nearest source of cleaning liquid, typically a water reserve.

The filtering device comprises a first chamber for dirty liquid and a second chamber for clean liquid. The cleaning system is configured to route liquid pumped from the discharge unit by the second pump into the first chamber. The filtering device comprises at least one primary filter and a third pump configured to pump liquid from the first chamber through the primary filter and into the second chamber. The filtering device comprises at least one secondary filter and a fourth pump configured to pump liquid from the second chamber through the secondary filter and back to the second chamber.

Further, the cleaning system is configured to supply the first pump with liquid from the second chamber. The at least one primary filter comprises a mechanical particle filter, and the at least one secondary filter comprises a chemical filter comprising active coal. The primary filter enables initial filtering of the liquid pumped from the discharge unit to mechanically remove particles whilst the secondary filter enables efficient filtering of liquid in the secondary chamber to remove certain chemicals. The third pump forces the dirty liquid from the first chamber through the primary filter(s). The fourth pump circulates filtered liquid through the secondary filter(s) to thoroughly clean the liquid. Liquid from the second chamber is supplied to the first pump such that it can be used for cleaning. Hence, a closed-loop cleaning system is achieved which will not clog the discharge unit. Since the liquid in the second chamber is repeatedly pumped through the secondary filter a very high degree of cleanliness is achieved such that the liquid can be subsequently emptied in nature with substantially no negative environmental impact. Thus, an advantage is that the cleaning system will not have to be transported to a recycling station for recycling of used cleaning liquid, thereby saving transport and reducing environmental impact whilst saving time for the operators of the system. Also, by emptying the system from liquid, the system can more easily be transported and also stored in cool environments without freezing.

The first and second chambers may be interconnected through a check valve configured such that liquid above a certain level can flow from the second chamber to the first chamber but not from the first chamber to the second chamber. When a high enough liquid level is reached in the second chamber, liquid starts to flow through the check valve and into the first chamber. This enables the third pump to continuously pump liquid from the first chamber through the first filter and into the second chamber such that more and more particles in the first chamber will be trapped in the first filter.

The cleaning system may be configured such that the fourth pump is operable independently of the other pumps. By providing for operation of the fourth pump independently of the other pumps, liquid in the second chamber can be thoroughly filtered for a long time after cleaning of the surface to be cleaned is finished. For example, during movement of the cleaning system, such as during trailering by car. Hence travel time can be used for such post processing of the liquid. After such prolonged filtering in the secondary filters, the liquid of the second chamber may be emptied into nature or into a sewer system, of course depending on local laws and regulations.

The cleaning system may further comprise a first hose for connecting the first pump to an inlet port of the discharge unit, and a second hose for connecting the outlet port of the discharge unit to the filtering device, directly or via the second pump. The first hose provides pressurized liquid to the discharge unit. The second hose allows for the second pump to bring back liquid from the discharge unit to the filtering device by suction of air and liquid. The inherent flexibility of the hoses allows for free moving about of the discharge unit for removal of graffiti. Further, the hoses enable use of the discharge unit at a distance from the filtering device and the other parts of the cleaning system, such that large areas can be covered, and work can be performed in narrow passages and close to parked cars or other objects.

The cleaning system may further comprise a screen provided in the interior space at a distance from at least a portion of the inside of the cover member thereby defining one or more air passages along the spray guard between the cover member and the screen. The screen limits air movement within the interior space such that air flows are concentrated to the passages formed. The speed of the air flow thus increases at the passages. The increase speed of air flow provides for more efficient transport of liquid along with the air flow.

The screen may be provided with vent holes. The vent holes prevent liquid build-up in the screen.

The one or more nozzles may be provided on an arm rotatably attached to the discharge unit within the interior space. The provision of the nozzles on an arm rotatably attached within the interior space of the discharge unit enables the nozzles to travel around inside the discharge unit such that each nozzle treats a greater area of the surface to be cleaned. The greater area covered further reduces the risk of damaging sensitive surfaces to be cleaned as compared to discharge on a very small area.

The one or more nozzles may be directed to force the arm to rotate by power of liquid exiting the nozzles. The use of so directed nozzles enables improved coverage of the area treated without reliance on a drive unit, thereby reducing the complexity of the system and increasing robustness of the system.

The spray guard may comprise bristles. The bristles are flexible and tough and adapts well to varying surfaces to be cleaned to thereby seal the interior space from the surroundings whilst allowing air to pass from the surroundings and into the interior space such that air and liquid are more easily transported out of the discharge unit. Further, the bristles will not scratch the surface to be cleaned

The cleaning system may further comprise a heating device configured to heat the liquid supplied to the discharge unit to a temperature suitable for graffiti removal, such as above 75 degrees centigrade. The provision of such a heating device enables more efficient removal of graffiti, especially on surfaces graffiti protected with wax coating.

The container, the filtering device and the first, second, third and fourth pumps may be mounted on a platform or frame, thereby enabling convenient handling of the cleaning system. The platform or frame may be mounted on a trailer. By mounting it on a trailer, it can easily be transported to where the graffiti is to be removed or to a place for refilling or emptying cleaning liquid.

The method according to the second aspect for removing graffiti from a surface to be cleaned comprises using a cleaning system according to the first aspect by: operating the first pump to thereby pump liquid from the container to the discharge unit, operating the discharge unit to discharge liquid onto the surface to be cleaned, operating the second pump to pump air and liquid from the interior space of the discharge unit and out through the outlet port through a hose and further to the filtering device, operating the third pump to mechanically filter the liquid, operating the fourth pump to chemically filter the liquid, and supplying the filtered liquid to the first pump.

### Brief description of drawings

Figs. 1-4 disclose a discharge unit shown in various perspectives.
Fig. 5 discloses the discharge unit of figs. 1-4 in exploded view.
Figs. 6-7 disclose a trailer provided with a cleaning system according to an embodiment (discharge unit not shown).

### Detailed description

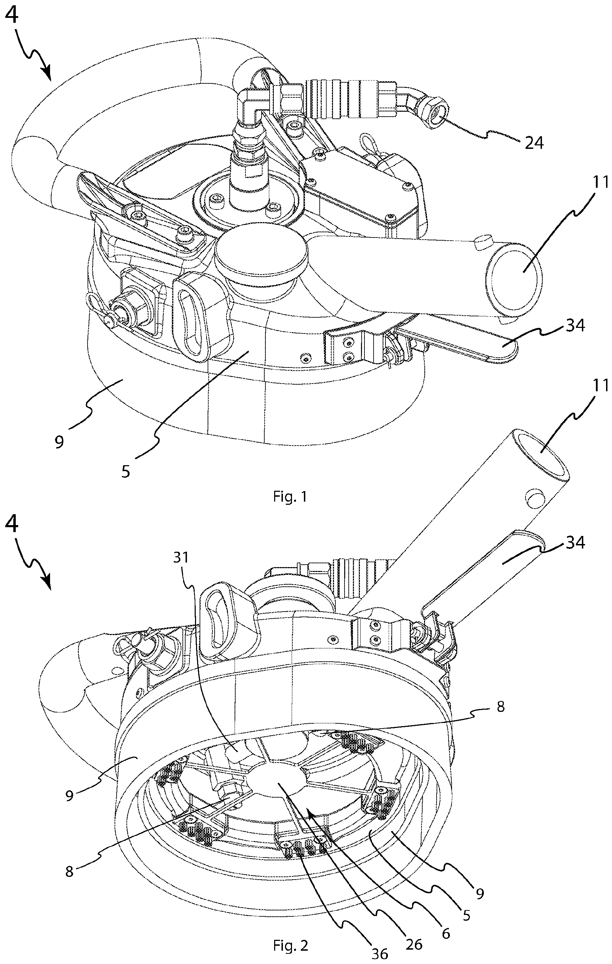

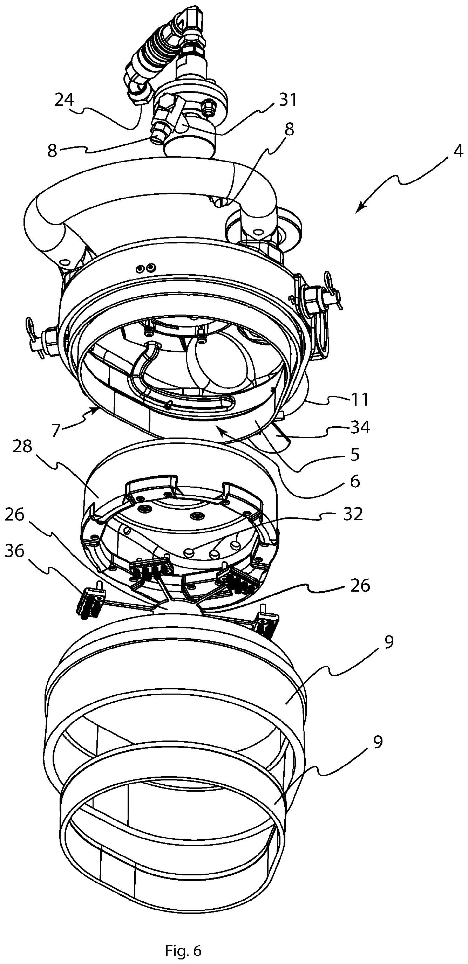

Embodiments of the invention will hereinafter be described with reference to the appended drawings. Figs. 1 -5 show a discharge unit 4 of a first embodiment of a cleaning system 1 and figs. 6-7 show a trailer 22 carrying the cleaning system 1.

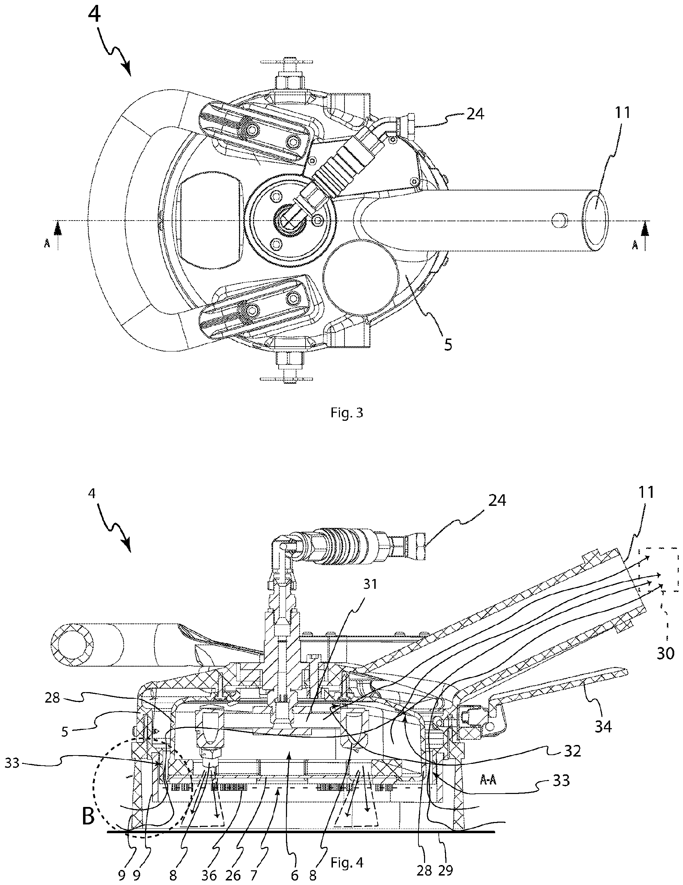

The cleaning system 1 is suitable for graffiti removal from a surface to be cleaned 29, typically an outer wall of a building. A schematic illustration of a surface to be cleaned 29 is shown in Fig. 4. Even if the surface 29 is shown as a straight line, it should be understood that the system is equally suitable for most other curved or uneven surfaces. The system 1 comprises a container 2 for liquid, a first pump 3 for pumping liquid from said container 2 to a discharge unit 4 connectable to the first pump 3 for discharging pumped liquid onto the surface 29 to be cleaned. The container 2 is preferably designed to accommodate about 300 liters of liquid but could however also be larger or smaller. The first pump 3 is a high-pressure pump capable of achieving a pressure suitable for graffiti removal, for example in the range of 50-150 bar. The discharge unit 4 comprises a cover member 5 defining an interior space 6 and an opening 7 (illustrated by the dashed line in Fig. 4 connecting to reference numeral 7) through which liquid is dischargeable from said interior space 6 onto the surface 29 to be cleaned. The cover member 5 is made by SLS 3d printing of polyamide subsequently treated to provide improved liquid resistance. In other embodiments, the cover member 5 may be produced by other suitable manufacturing methods and in other materials, such as by injection molding of thermoplastic, by molding of metal or by milling from a solid piece of material. Two nozzles 8 are provided within said interior space 6 for discharging liquid pumped by said first pump 3. The nozzles 8 are made of a suitable material such brass or steel. Although two nozzles 8 are used in this embodiment, any suitable number of nozzles 8 could be used, all depending on the size of the discharge unit 4, capacity of the first pump 3, etc. The nozzles 8 are provided on an arm 31 rotatably attached to the discharge unit 4 within the interior space 6. Further, the nozzles 8 are directed so as to force the arm 31 to rotate by power of liquid exiting the nozzles 8. The self-powering design of the arm 31 and nozzles 8 could alternatively be modified by the addition of a powered drive for controlling movement of arm 31 or nozzles 8.

A circumferential portion of said cover member 5 is provided with a resilient spray guard 9 configured for sealing against the surface 29 to be cleaned. In this embodiment, the spray guard 9 comprises two circumferential rows of bristles. Each row of bristles forms a respective ring around the opening 7. It should be understood that in other embodiment, the exact structure of the spray guard 9 could be modified as long as it functions to seal against the surface 29 to be cleaned whilst letting air through for suction of liquid out of the discharge unit 4. For example, it may be possible to use only one row of bristles, or more than two rows. Also, resilient flaps, for example from an elastomer material, might work too. The material should preferably be resistant to common solvents, paints and other chemicals involved during graffiti removal. Further, the material should be capable of resisting use of heated liquid of temperatures commonly used for graffiti removal, such as a resistance at least up to 95 degrees centigrade, preferably greater. Also, although shown as straight, best shown in Fig. 4, the bristles bend much at use and the operator often forces the discharge unit 4 against the surface 29 to be cleaned until rigid portions of the cover member 5 or any screen 28 touches the surface 29 to be cleaned. In some embodiments, the discharge unit 4 is therefore provided with a nozzle guard 26 to prevent damaging the nozzles 8. Also, as shown in Figs. 2 and 4-6, the nozzle guard 26 may be provided with distance members 36, also called spacers, such as brushes or low-friction plastic pads reducing wear and ensuring air and liquid flow 30 through the discharge unit 4.

The system further comprises a second pump 10 connectable to an outlet port 11 of the discharge unit 4 for pumping air and liquid from said interior space 6 and out through the outlet port 11. A vacuum pump could be used as the second pump 10. The second pump 10 should be capable of achieving a high enough air flow 30 to transport liquid along the airflow 30 from the discharge unit 4. Too strong air flow 30 might create a too high vacuum in the discharge unit 4 such that movement of the discharge unit 4 over the surface 29 to be cleaned could be more difficult. At the same time, a too low air flow 30 would lead to unsatisfactory suction of air and liquid from the discharge unit 4. The second pump 10 is preferably self-draining to avoid freezing damages in cold environments.

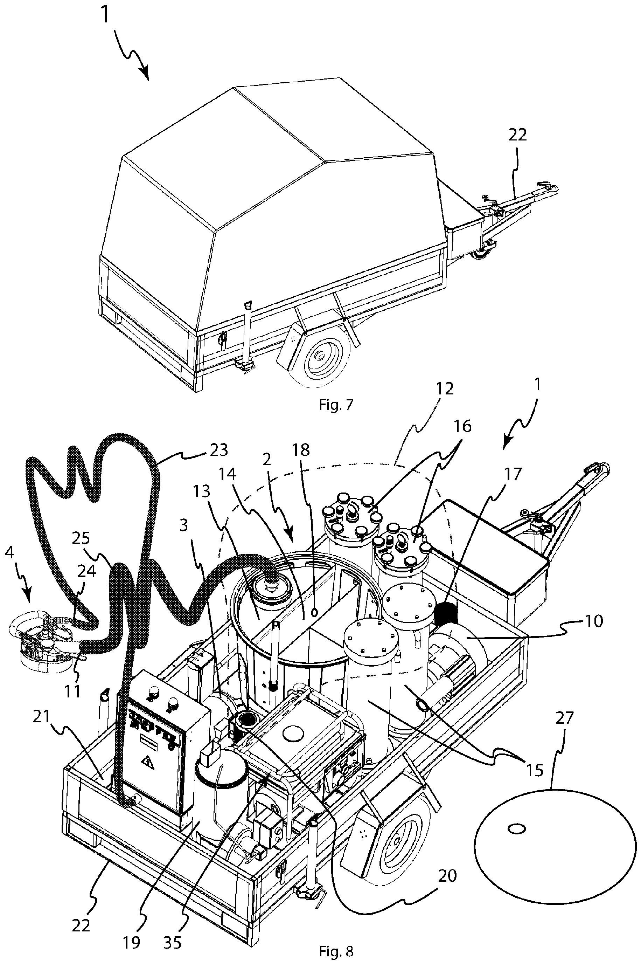

The cleaning system 1 further comprises a filtering device 12 configured to filter the liquid pumped from the discharge unit 4 by the second pump 10 and subsequently supply it to the first pump 3. The filtering device 12 comprises a first chamber 13 for dirty liquid and a second chamber 14 for clean liquid. In the embodiment shown, the second chamber 14 is comprised in the container 2 although other arrangements may alternatively be possible. In the embodiment shown in the figures, the first 13 and second 14 chambers are provided inside a common outer container 2 divided by an inner wall, but in other embodiments separate firs could alternatively be used. Further, the second chamber 14 is provided with inner walls for limiting liquid flow within the chamber at transport of the chamber, thereby improving safety and reducing risk of spill. The inner walls are shown in Fig. 8 as T-shaped although other configurations could be used. Also, the first 13 and second 14 chambers are normally covered by a lid 27, removed for illustrative purposes. The cleaning system 1 is configured to route liquid pumped from the discharge unit 4 by the second pump 10 into the first chamber 13, typically by means of a hose or pipe. In the embodiment shown, the second pump 10 is connected to the first chamber 13 for pumping air out of the first chamber 13 to establish an under pressure in the first chamber 13. The under pressure in the first chamber 13 in turn enables suction of liquid and air from the discharge unit 4 through the second hose 25 and into the first chamber 13. In other embodiments, the second hose 25 could be connected directly to the second pump 10 which then connects to the first chamber 13, however that would risk contaminating the second pump 10 with dirt from the surface 29 cleaned and thus cause wear of the second pump 10. Also, the filtering device 12 comprises at least one primary filter 15 and a third pump 20 configured to pump liquid from the first chamber 13 through the primary filter 15 and into the second chamber 14. The filtering device 12 comprises at least one secondary filter 16 and a fourth pump 17 configured to pump liquid from the second chamber 14 through the secondary filter 16 and back to the second chamber 14. Further, the cleaning system 1 is configured to supply the first pump 3 with liquid from the second chamber 14. The at least one primary filter 15 comprises a mechanical particle filter. The at least one secondary filter 16 comprises a chemical filter comprising active coal. A mechanical filter here means a filter provided with a filter medium suitable for trapping particles above a certain size. In this embodiment, two mechanical filters 15 are provided, one of the for trapping larger particles and the other one for subsequently trapping smaller particles. Similarly, the chemical filters are not for trapping particles, but for trapping various hazardous substances not trapped in the primary filters 15. The secondary filters 16 thus comprise suitable filter media, including, but not limited to, active coal. In this embodiment, two chemical filters are provided, each one comprising 12 kg of active coal.

The fourth pump 17 is configured to allow for a flow rate of about 8 liters per minute through the secondary filters 16, although other flow rates could be used in other embodiments. The third pump 20 is configured to allow for a flow rate of about 20 liters per minute through the primary filters, although other flow rates could be used in other embodiments. The filter media of each primary and secondary filter 16 can be exchanged to new ones when needed. A metering system may be provided to measure pressure drop over each filter in order to assist in determining whether or not filter media is in need of replacement.

The filtering device 12 is designed such that pieces of solidified wax removed from a surface 29 cleaned may easily be removed from a distal end of the primary filter 15 or from the first chamber 13, wherever it solidifies first. Thus, the filtering device 12 is designed such that the liquid cools enough to solidify any wax in the liquid to be filtered before the wax reaches the particle filtering media of the primary filters 15. Alternatively, a specific wax trap may be provided in the filtering device 12 before the filtering media of the primary filters 15. Such a wax trap may typically be required in hot climates where the hot liquid pumped may otherwise not cool off enough before reaching the filter media of the primary filters 15.

In the present embodiment, an optional course filter is provided at the inlet of the first chamber 13, said coarse filter being configured to filter out particles larger than 150 pm. The coarse filter is readily accessible for being emptied and wiped clean.

The first 13 and second 14 chambers are interconnected through a check valve 18 configured such that liquid above a certain level can flow from the second chamber 14 to the first chamber 13 but not from the first chamber 13 to the second chamber 14.

The cleaning system 1 is configured such that the fourth pump 17 is operable independently of the first 3, second 10, and third 20 pumps. For example, the fourth pump 17 may be controlled by a manual switch or a timer configured to always run for a predetermined time after one of the first 3, second 10 or third 20 pump has been switched off. The time of separately running the fourth pump 17 should be set long enough to ensure low levels of residual hazardous substances in the liquid of the second chamber 14.

The cleaning system 1 further comprises a first hose 23 for connecting the first pump 3 to an inlet port 24 of the discharge unit 4, and a second hose 25 for connecting the outlet port 11 of the discharge unit 4 to the filtering device 12, directly or via the second pump 10. A suitable length of each hose is 25 meters, although in other embodiments other lengths may be used.

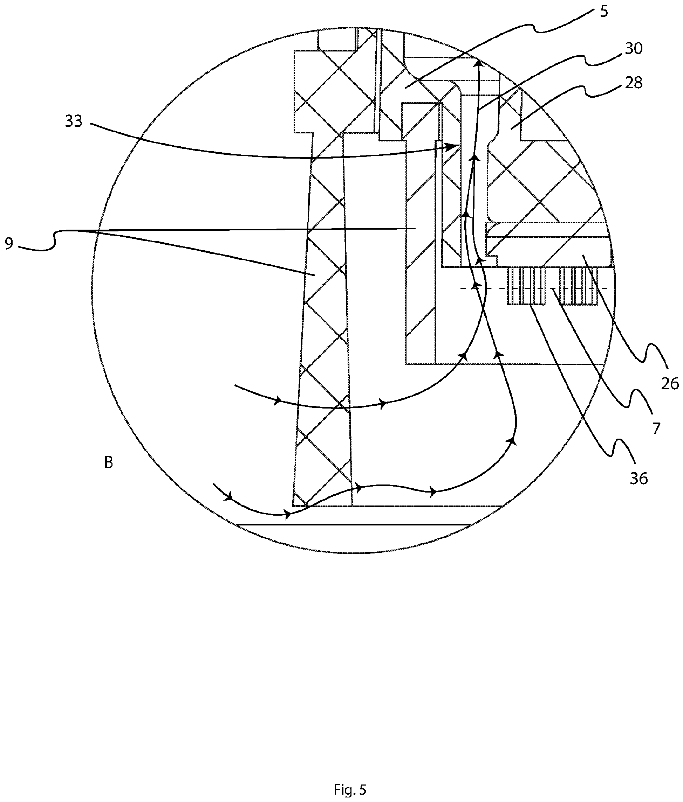

The hoses may be bundled to form one composite hose. Further, the hoses may be provided on hose reels. As best shown in Figs. 4 and 5, A screen 28 is provided in the interior space 6 at a distance from at least a portion of the inside of the cover member 5 thereby defining one or more air passages 33 along the spray guard 9 between the cover member 5 and the screen 28. The screen 28 is provided with vent holes 32. The screen 28 is attached to the cover member 5 using screws but in alternative embodiments, the screen 28 may be integrally manufactured with the cover member 5, for example by 3d-printing.

The cleaning system 1 further comprises a heating device 19 configured to heat the liquid supplied to the discharge unit 4 to a temperature suitable for graffiti removal, such as above 75 degrees centigrade in order to melt wax of the anti-graffiti coating, but preferably below boiling point of the liquid such that high-pressure liquid is discharged and not gas. Discharge of gas only would not be efficient for graffiti removal. The heating device 19 is an electrical heater powered by a petrol or diesel electric power generator 35 but may in other embodiments be some other suitable type of heater.

In this embodiment, the filtering device 12 and the pumps 3, 10, 17, 20 are mounted on a platform or frame 21 placed on a trailer 22. The platform or frame 21 is designed such that it can be lifted by a forklift truck since that enables convenient moving of the cleaning system 1. In other embodiments, the platform or frame 21 could be placed in a vehicle such as a utility van, or the cleaning system 1 could be integrated into a utility van or other car.

Removal of graffiti from a surface to be cleaned 29 using a cleaning system 1 according to the above described embodiment is performed by: operating the first pump 3 to thereby pump liquid from the container 2 through the first hose 23 to the discharge unit 4, operating the discharge unit 4 to discharge liquid onto the surface to be cleaned 29, operating the second pump 10 to pump air and liquid from the interior space 6 of the discharge unit 4 and out through the outlet port 11 through the second hose 25 and further to the filtering device 12, operating the third pump 20 to mechanically filter the liquid, operating the fourth pump 17 to chemically filter the liquid, and supplying the filtered liquid to the first pump 3.

The first 3, second 10, third 20 and fourth 17 pumps are preferably electric pumps driven by a suitable power source such as batteries and/or a petrol or diesel electric power generator 35. The more power consuming pumps, i.e., the first 3 and second 10 pumps, are preferably driven primarily with power generated by the electric power generator 35 since the batteries might run empty if used by those pumps.

The discharge unit 4 is provided with an actuator 34 for remote control of the first pump 3. Such remote control enables interruption of the liquid discharge from the discharge unit 4. The remote control also reduces wear of the first pump 3 and reduces noise emissions. The actuator 34 is connected to a control unit either by wired or wirelessly. In the embodiment shown, a wireless connection is used by the provision of a watertight compartment for electronics in the discharge unit 4. Ultimately, operation of the actuator 34 controls a valve between first pump 3 and the discharge unit 4, wherein closing of the valve causes pressure buildup in the first pump 3 which then typically switches off upon reaching an upper threshold pressure. Once the valve opens, the pressure sinks below the threshold pressure and the first pump 3 starts again. It should be understood that the remote control of the first pump 3 may be achieved in other ways, such as by a wired connection controlling power to the first pump to switch the first pump 3 on in response to movement of the actuator 34 to a first position, and off in response to movement of the actuator 34 to a second position.

The discharge unit 4 also comprises a temperature sensor configured to sense the temperature of liquid in the interior space 6. Depending on outdoor temperature the temperature of liquid leaving the discharge nozzles 8 may be much lower that the liquid leaving the heating device 19. A proper temperature in the interior space 6 is important for proper cleaning action.

The sensor may be connected to an automatic control system using the sensor output to control the temperature of the heating device 19, or the sensor may simply be connected to a temperature gauge visible to the operator of the cleaning system 1.

Also, the cleaning system 1 may comprise a portable infra-red radiator driven either by electricity or by gas. Electricity is provided by the petrol or diesel electric power generator 35. The I R-radiator is used to dry the surface 29 after cleaning. A dry surface is needed in order to be able to apply one or more layers of anti-graffiti coating product, such as wax. Hence, the IR- radiator saves time for the operator of the cleaning system 1 such that the operator does not have to wait for the surface 29 to naturally dry.

In all embodiments described, the liquid filled into the container 2 could be water.

## Claims

1. A graffiti removal system (1) from a surface to be cleaned (29), wherein said system (1) comprises
a container (2) for liquid,
a first pump (3) for pumping liquid from said container (2) to a discharge unit (4) connectable to the first pump (3) for discharging pumped liquid onto the surface to be cleaned (29),
wherein said discharge unit (4) comprises a cover member (5) defining an interior space (6) and an opening (7) through which liquid is dischargeable from said interior space (6) onto the surface to be cleaned (29),
wherein one or more nozzles (8) are provided within said interior space (6) for discharging liquid pumped by said first pump (3),
wherein a circumferential portion of said cover member (5) is provided with a resilient spray guard (9) configured for sealing against the surface to be cleaned (29), and
wherein the system further comprises a second pump (10) connectable to an outlet port (11) of the discharge unit (4) for pumping air and liquid from said interior space (6) and out through the outlet port (11);
wherein the system further comprises a filtering device (12) configured to filter the liquid pumped from the discharge unit (4) by the second pump (10) and subsequently supply it to the first pump (3) wherein the filtering device (12) is **characterized in that** comprises a first chamber (13) for dirty liquid and a second chamber (14) for clean liquid,
wherein the cleaning system (1) is configured to route liquid pumped from the discharge unit (4) by the second pump (10) into the first chamber (13), wherein the filtering device (12) comprises at least one primary filter (15) and a third pump (20) configured to pump liquid from the first chamber (13) through the primary filter (15) and into the second chamber (14),
wherein the filtering device (12) comprises at least one secondary filter (16) and a fourth pump (17) configured to pump liquid from the second chamber (13) through the secondary filter (16) and back to the second chamber (14), wherein the cleaning system (1) is configured to supply the first pump (3) with liquid from the second chamber (14), and
wherein the at least one primary filter (15) comprises a mechanical particle filter, and wherein the at least one secondary filter (16) comprises a chemical filter comprising active coal.

2. A system (1) according to claim 1, wherein the first (13) and second (14) chambers are interconnected through a check valve (18) configured such that liquid above a certain level can flow from the second chamber (14) to the first chamber (13) but not from the first chamber (13) to the second chamber (14).

3. A system (1) according to any one of claims 1-2, said cleaning system (1) being configured such that the fourth pump (17) is operable independently of the other pumps.

4. A system (1) according to any one of claims 1-3, wherein the cleaning system (1) further comprises a first hose (23) for connecting the first pump (3) to an inlet port (24) of the discharge unit (4), and a second hose (25) for connecting the outlet port (11) of the discharge unit (4) to the filtering device (12), directly or via the second pump (10).

5. A system (1) according to any one of the preceding claims, further comprising a screen (28) provided in the interior space (6) at a distance from at least a portion of the inside of the cover member (5) thereby defining one or more air passages (33) along the spray guard (9) between the cover member (5) and the screen (28).

6. A system (1) according to claim 5, wherein the screen (28) is provided with vent holes (32).

7. A system (1) according to any one of the preceding claims, wherein the one or more nozzles (8) are provided on an arm (31) rotatably attached to the discharge unit (4) within the interior space (6).

8. A system (1) according to claim 7, wherein the one or more nozzles (8) are directed so as to force the arm (31) to rotate by power of liquid exiting the nozzles (8).

9. A system (1) according to any one of the preceding claims, wherein the spray guard (9) comprises bristles.

10. A system (1) according to any one of the preceding claims, further comprising a heating device (19) configured to heat the liquid supplied to the discharge unit (4) to a temperature suitable for graffiti removal, such as above 75 degrees centigrade.

11. A system (1) according to any one of claims 1-10, wherein the container (2), the filtering device (12) and the pumps (3, 10, 17, 20) are mounted on a platform or frame (21).

12. A system (1) according to claim 11, wherein said platform or frame (21) is mounted on a trailer (22).

13. Method of removing graffiti from a surface to be cleaned (29) using a cleaning system (1) according to any one of claims 1-12 by
operating the first pump (3) to thereby pump liquid from the container (2) to the discharge unit (4),
operating the discharge unit (4) to discharge liquid onto the surface to be cleaned (29),
operating the second pump (10) to pump air and liquid from the interior space (6) of the discharge unit (4) and out through the outlet port (11) through a hose and further to the filtering device (12),
operating the third pump (20) to mechanically filter the liquid,
operating the fourth pump (17) to chemically filter the liquid, and
supplying the filtered liquid to the first pump (3).

## Patentansprüche

1. System (1) zur Entfernung von Graffiti von einer zu reinigenden Oberfläche (29), wobei das System (1) Folgendes umfasst
einen Behälter (2) für Flüssigkeit,
eine erste Pumpe (3) zum Pumpen von Flüssigkeit aus dem Behälter (2) zu einer Auslasseinheit (4), die mit der ersten Pumpe (3) verbunden werden kann, um die gepumpte Flüssigkeit auf die zu reinigende Oberfläche (29) auszulassen,
wobei die Ablasseinheit (4) ein Abdeckelement (5) umfasst, das einen Innenraum (6) und eine Öffnung (7) definiert, durch die Flüssigkeit aus dem Innenraum (6) auf die zu reinigende Oberfläche (29) abgegeben werden kann,
wobei eine oder mehrere Düsen (8) in dem Innenraum (6) vorgesehen sind, um die von der ersten Pumpe (3) gepumpte Flüssigkeit auszustoßen,
wobei ein Umfangsabschnitt des Abdeckelements (5) mit einem elastischen Spritzschutz (9) versehen ist, der zum Abdichten gegen die zu reinigende Oberfläche (29) konfiguriert ist, und
wobei das System ferner eine zweite Pumpe (10) umfasst, die mit einer Auslassöffnung (11) der Auslasseinheit (4) verbunden werden kann, um Luft und Flüssigkeit aus dem Innenraum (6) und durch die Auslassöffnung (11) herauszupumpen;
wobei das System ferner eine Filtervorrichtung (12) umfasst, die so konfiguriert ist, dass sie die von der Auslasseinheit (4) durch die zweite Pumpe (10) gepumpte Flüssigkeit filtert und sie anschließend der ersten Pumpe (3) zuführt, wobei die Filtervorrichtung (12) **dadurch gekennzeichnet ist, dass** sie eine erste Kammer (13) für schmutzige Flüssigkeit und eine zweite Kammer (14) für saubere Flüssigkeit umfasst,
wobei das Reinigungssystem (1) so konfiguriert ist, dass es die von der Auslasseinheit (4) durch die zweite Pumpe (10) gepumpte Flüssigkeit in die erste Kammer (13) leitet, wobei die Filtervorrichtung (12) mindestens einen Primärfilter (15) und eine dritte Pumpe (20) umfasst, die so konfiguriert ist, dass sie Flüssigkeit von der ersten Kammer (13) durch den Primärfilter (15) und in die zweite Kammer (14) pumpt,
wobei die Filtervorrichtung (12) mindestens einen Sekundärfilter (16) und eine vierte Pumpe (17) umfasst, die so konfiguriert ist, dass sie Flüssigkeit aus der zweiten Kammer (13) durch den Sekundärfilter (16) und zurück in die zweite Kammer (14) pumpt, wobei das Reinigungssystem (1) so konfiguriert ist, dass es die erste Pumpe (3) mit Flüssigkeit aus der zweiten Kammer (14) versorgt, und
wobei der mindestens eine Primärfilter (15) einen mechanischen Partikelfilter umfasst, und wobei der mindestens eine Sekundärfilter (16) einen chemischen Filter umfasst, der Aktivkohle enthält.

2. System (1) nach Anspruch 1, wobei die erste (13) und die zweite (14) Kammer durch ein Rückschlagventil (18) miteinander verbunden sind, das so konfiguriert ist, dass Flüssigkeit oberhalb eines bestimmten Niveaus von der zweiten Kammer (14) in die erste Kammer (13), aber nicht von der ersten Kammer (13) in die zweite Kammer (14) fließen kann.

3. System (1) nach einem der Ansprüche 1 bis 2, wobei das Reinigungssystem (1) so gestaltet ist, dass die vierte Pumpe (17) unabhängig von den anderen Pumpen betrieben werden kann.

4. System (1) nach einem der Ansprüche 1 bis 3, wobei das Reinigungssystem (1) ferner einen ersten Schlauch (23) zum Verbinden der ersten Pumpe (3) mit einer Einlassöffnung (24) der Austragseinheit (4) und einen zweiten Schlauch (25) zum Verbinden der Auslassöffnung (11) der Austragseinheit (4) mit der Filtervorrichtung (12) direkt oder über die zweite Pumpe (10) umfasst.

5. System (1) nach einem der vorhergehenden Ansprüche, ferner mit einem Schirm (28), der in dem Innenraum (6) in einem Abstand von mindestens einem Teil der Innenseite des Abdeckelements (5) vorgesehen ist, wodurch ein oder mehrere Luftdurchgänge (33) entlang des Sprühschutzes (9) zwischen dem Abdeckelement (5) und dem Schirm (28) definiert werden.

6. System (1) nach Anspruch 5, wobei das Sieb (28) mit Entlüftungslöchern (32) versehen ist.

7. System (1) nach einem der vorhergehenden Ansprüche, wobei die eine oder die mehreren Düsen (8) an einem Arm (31) vorgesehen sind, der drehbar an der Austragseinheit (4) innerhalb des Innenraums (6) angebracht ist.

8. System (1) nach Anspruch 7, wobei die eine oder die mehreren Düsen (8) so ausgerichtet sind, dass sie den Arm (31) durch die Kraft der aus den Düsen (8) austretenden Flüssigkeit in Drehung versetzen.

9. System (1) nach einem der vorhergehenden Ansprüche, wobei der Spritzschutz (9) Borsten aufweist.

10. System (1) nach einem der vorhergehenden Ansprüche, das ferner eine Heizvorrichtung (19) umfasst, die so konfiguriert ist, dass sie die der Austragseinheit (4) zugeführte Flüssigkeit auf eine für die Graffitientfernung geeignete Temperatur erhitzt, beispielsweise auf über 75 Grad Celsius.

11. System (1) nach einem der Ansprüche 1-10, wobei der Behälter (2), die Filtervorrichtung (12) und die Pumpen (3, 10, 17, 20) auf einer Plattform oder einem Rahmen (21) montiert sind.

12. System (1) nach Anspruch 11, wobei die Plattform oder der Rahmen (21) auf einem Anhänger (22) montiert ist.

13. Verfahren zum Entfernen von Graffiti von einer zu reinigenden Oberfläche (29) unter Verwendung eines Reinigungssystems (1) nach einem der Ansprüche 1-12 durch
Betätigung der ersten Pumpe (3), um dadurch Flüssigkeit aus dem Behälter (2) zur Auslasseinheit (4) zu pumpen,
Betätigung der Austragseinheit (4), um Flüssigkeit auf die zu reinigende Fläche (29) auszutragen,
Betreiben der zweiten Pumpe (10), um Luft und Flüssigkeit aus dem Innenraum (6) der Auslasseinheit (4) und durch die Auslassöffnung (11) über einen Schlauch nach außen und weiter zur Filtervorrichtung (12) zu pumpen,
Betätigung der dritten Pumpe (20), um die Flüssigkeit mechanisch zu filtern,
Betätigung der vierten Pumpe (17), um die Flüssigkeit chemisch zu filtern, und
Zuführung der gefilterten Flüssigkeit zur ersten Pumpe (3).

## Revendications

1. Système d'élimination de graffiti (1) d'une surface à nettoyer (29), dans lequel ledit système (1) comprend
un récipient (2) pour le liquide,
une première pompe (3) pour pomper le liquide dudit récipient (2) vers une unité de décharge (4) pouvant être connectée à la première pompe (3) pour décharger le liquide pompé sur la surface à nettoyer (29),
dans lequel ladite unité de décharge (4) comprend un élément de couverture (5) définissant un espace intérieur (6) et une ouverture (7) à travers laquelle le liquide peut être déchargé dudit espace intérieur (6) sur la surface à nettoyer (29),
dans lequel une ou plusieurs buses (8) sont prévues dans ledit espace intérieur (6) pour décharger le liquide pompé par ladite première pompe (3),
dans lequel une partie circonférentielle dudit élément de couverture (5) est pourvue d'une protection élastique contre les projections (9) configurée pour assurer l'étanchéité contre la surface à nettoyer (29), et
dans lequel le système comprend en outre une seconde pompe (10) pouvant être connectée à un orifice de sortie (11) de l'unité de décharge (4) pour pomper l'air et le liquide dudit espace intérieur (6) et les faire sortir par l'orifice de sortie (11) ;
dans lequel le système comprend en outre un dispositif de filtrage (12) configuré pour filtrer le liquide pompé depuis l'unité de décharge (4) par la seconde pompe (10) et le fournir ensuite à la première pompe (3), dans lequel le dispositif de filtrage (12) est **caractérisé en ce qu'**il comprend une première chambre (13) pour le liquide sale et une seconde chambre (14) pour le liquide propre,
dans lequel le système de nettoyage (1) est configuré pour acheminer le liquide pompé depuis l'unité de décharge (4) par la deuxième pompe (10) dans la première chambre (13), dans lequel le dispositif de filtrage (12) comprend au moins un filtre primaire (15) et une troisième pompe (20) configurée pour pomper le liquide depuis la première chambre (13) à travers le filtre primaire (15) et dans la deuxième chambre (14),
dans lequel le dispositif de filtrage (12) comprend au moins un filtre secondaire (16) et une quatrième pompe (17) configurée pour pomper le liquide de la deuxième chambre (13) à travers le filtre secondaire (16) et le ramener à la deuxième chambre (14), dans lequel le système de nettoyage (1) est configuré pour alimenter la première pompe (3) avec le liquide de la deuxième chambre (14), et
dans lequel le au moins un filtre primaire (15) comprend un filtre mécanique à particules, et dans lequel le au moins un filtre secondaire (16) comprend un filtre chimique comprenant du charbon actif.

2. Système (1) selon la revendication 1, dans lequel la première (13) et la deuxième (14) chambres sont interconnectées par un clapet anti-retour (18) configuré de telle sorte que le liquide au-dessus d'un certain niveau peut s'écouler de la deuxième chambre (14) vers la première chambre (13) mais pas de la première chambre (13) vers la deuxième chambre (14).

3. Système (1) selon l'une quelconque des revendications 1 à 2, ledit système de nettoyage (1) étant configuré de telle sorte que la quatrième pompe (17) puisse fonctionner indépendamment des autres pompes.

4. Système (1) selon l'une quelconque des revendications 1 à 3, dans lequel le système de nettoyage (1) comprend en outre un premier tuyau (23) pour relier la première pompe (3) à un orifice d'entrée (24) de l'unité d'évacuation (4), et un second tuyau (25) pour relier l'orifice de sortie (11) de l'unité d'évacuation (4) au dispositif de filtrage (12), directement ou via la seconde pompe (10).

5. Système (1) selon l'une quelconque des revendications précédentes, comprenant en outre un écran (28) prévu dans l'espace intérieur (6) à une distance d'au moins une partie de l'intérieur de l'élément de couverture (5), définissant ainsi un ou plusieurs passages d'air (33) le long de la garde de pulvérisation (9) entre l'élément de couverture (5) et l'écran (28).

6. Système (1) selon la revendication 5, dans lequel l'écran (28) est pourvu de trous de ventilation (32).

7. Système (1) selon l'une quelconque des revendications précédentes, dans lequel l'une ou plusieurs buses (8) sont prévues sur un bras (31) fixé de manière rotative à l'unité de décharge (4) à l'intérieur de l'espace intérieur (6).

8. Système (1) selon la revendication 7, dans lequel la ou les buses (8) sont dirigées de manière à forcer le bras (31) à tourner sous l'effet du liquide sortant des buses (8).

9. Système (1) selon l'une quelconque des revendications précédentes, dans lequel le protecteur de jet (9) comprend des poils.

10. Système (1) selon l'une quelconque des revendications précédentes, comprenant en outre un dispositif de chauffage (19) configuré pour chauffer le liquide fourni à l'unité de décharge (4) à une température appropriée pour l'élimination des graffitis, telle que supérieure à 75 degrés centigrades.

11. Système (1) selon l'une quelconque des revendications 1 à 10, dans lequel le récipient (2), le dispositif de filtrage (12) et les pompes (3, 10, 17, 20) sont montés sur une plateforme ou un châssis (21).

12. Système (1) selon la revendication 11, dans lequel ladite plate-forme ou cadre (21) est montée sur une remorque (22).

13. Procédé d'élimination de graffitis d'une surface à nettoyer (29) à l'aide d'un système de nettoyage (1) selon l'une quelconque des revendications 1 à 12, par
actionner la première pompe (3) pour pomper ainsi le liquide du récipient (2) vers l'unité de décharge (4),
actionner l'unité de décharge (4) pour décharger le liquide sur la surface à nettoyer (29), faire fonctionner la seconde pompe (10) pour pomper l'air et le liquide de l'espace intérieur (6) de l'unité de décharge (4) et les faire sortir par l'orifice de sortie (11) à travers un tuyau et ensuite vers le dispositif de filtrage (12),
faire fonctionner la troisième pompe (20) pour filtrer mécaniquement le liquide,
faire fonctionner la quatrième pompe (17) pour filtrer chimiquement le liquide, et
fournir le liquide filtré à la première pompe (3).
